Europäisches Patentamt

European Patent Office

Office européen des brevets

(19)

(11) **EP 1 141 441 B1**

(12) # FASCICULE DE BREVET EUROPEEN

(45) Date de publication et mention
de la délivrance du brevet:
**19.02.2003 Bulletin 2003/08**

(21) Numéro de dépôt: **99958337.0**

(22) Date de dépôt: **15.12.1999**

(51) Int Cl.7: **C23C 18/16**, C23C 18/44,
C23C 18/34, F01D 5/28

(86) Numéro de dépôt international:
**PCT/FR99/03153**

(87) Numéro de publication internationale:
**WO 00/036180 (22.06.2000 Gazette 2000/25)**

(54) **PROCEDE POUR FORMER UN REVETEMENT D'ALLIAGE METALLIQUE DE TYPE MCrAlY**

VERFAHREN ZUR HERSTELLUNG EINER BESCHICHTUNG AUS METALLEGIERUNG VOM TYPE MCrAlY

METHOD FOR FORMING A METAL ALLOY COATING OF THE TYPE MCrAlY

(84) Etats contractants désignés:
**AT BE CH CY DE DK ES FI FR GB GR IE IT LI LU MC NL PT SE**

(30) Priorité: **16.12.1998 FR 9815888**

(43) Date de publication de la demande:
**10.10.2001 Bulletin 2001/41**

(73) Titulaire: **ONERA (Office National d'Etudes et de Recherches Aérospatiales)
92320 Châtillon (FR)**

(72) Inventeurs:
• **BACOS, Marie Pierre
F-92160 Antony (FR)**
• **JOSSO, Pierre
F-92130 Issy-les-Moulineaux (FR)**

(74) Mandataire: **Rousset, Jean-Claude
Cabinet Netter
36, avenue Hoche
75008 Paris (FR)**

(56) Documents cités:
**US-A- 3 918 139       US-A- 4 477 538
US-A- 4 789 441       US-A- 5 833 829**

## Description

L'invention concerne un procédé pour former sur un substrat métallique un revêtement métallique contenant du nickel et/ou du cobalt, du chrome, de l'aluminium et de l'yttrium, comprenant une phase γ et une phase β dispersée dans la phase γ et propre à former à partir de la phase β, par exposition à l'oxygène à température élevée, une barrière superficielle adhérente d'alumine.

Il est connu de protéger contre la corrosion et/ou l'oxydation des pièces métalliques travaillant à des températures élevées, notamment des aubes de turbines aéronautiques, par différents revêtements obtenus par diffusion (essentiellement à base d'aluminiure de nickel β-NiAl, éventuellement modifiés par des éléments additionnels). Ces revêtements présentent de nombreux avantages mais ils sont limités en composition. Pour certaines applications le revêtement "idéal" peut avoir une composition chimique impossible à obtenir par diffusion. C'est pourquoi la projection d'alliages tels que ceux désignés par la formule qualitative MCrAlY (avec M = Ni et/ou Co et/ou Fe) a été étudiée au moyen de techniques de dépôt physique. Ces techniques permettent d'ajouter dans le dépôt à l'état de traces (jusqu'à 2 %) des éléments dits "actifs" tels que l'yttrium, le hafnium, le tantale et le zirconium.

Un exemple typique d'un revêtement de MCrAlY est constitué par un alliage à base de nickel contenant 20 % en poids de cobalt, permettant d'éviter la réaction:

$$\gamma\text{-Ni} + \beta\text{-NiAl} \rightarrow \gamma'\text{-Ni}_3\text{Al} + \alpha\text{-Cr},$$

possible dès 1 000 °C, 20 à 25 % de chrome pour le renforcement de la résistance à la corrosion de type I, 6 à 8 % d'aluminium (élément aluminoformeur) et environ 0,5 % d'yttrium, qui renforce l'adhérence de la couche d'alumine à l'alliage aluminoformeur. Sa microstructure générale est celle d'un alliage biphasé contenant des précipités de β-NiAl (phase aluminoformeuse) dans une matrice γ. Selon les conditions d'utilisation, d'autres éléments peuvent être ajoutés, et/ou les concentrations ci-dessus modifiées. Par exemple, si ce revêtement est destiné à lutter contre la corrosion à chaud de type II en présence de vanadium, la concentration en chrome peut dépasser 30 % en masse. De nombreuses compositions de MCrAlY sont disponibles commercialement, les plus utilisées étant celles connues sous les dénominations AMDRY 997 (NiCoCrAlYTa) et AMDRY 995 (CoNiCrAlYTa).

Un aspect particulièrement intéressant de ces alliages protecteurs est la possibilité d'y ajouter des éléments actifs. L'addition, en faible quantité (de l'ordre de 1 % atomique ou moins), d'éléments tels que Y et Hf améliore de façon très nette l'adhésion de couches de $Cr_2O_3$ ou d'$Al_2O_3$ sur les alliages en question. De ce fait, l'effet protecteur de la couche d'oxyde est conservé sur des durées importantes, notamment dans des conditions de cyclage thermique.

Parmi les techniques de dépôt physique évoquées ci-dessus pour l'obtention de revêtements MCrAlY on peut citer notamment la projection à chaud et plus particulièrement la projection plasma, dans laquelle le matériau à déposer est introduit, au moyen d'un gaz porteur, dans le jet d'une torche à plasma sous forme de grains de poudre de 20 à 100 μm de diamètre. Après fusion, les gouttelettes du matériau devenu liquide sont projetées à grande vitesse sur la surface du substrat. La flamme-plasma résulte de la détente à grande vitesse dans une anode-tuyère d'un gaz plasmagène (Ar + 10 % H$_2$, par exemple) ionisé lors de son passage dans une chambre à arc. On peut ainsi déposer à la surface d'un substrat quelconque tout matériau disponible en poudre pouvant être fondu sans décomposition ni évaporation. Cette projection peut se faire soit à la pression atmosphérique (à l'air ou en atmosphère neutre), soit sous pression réduite. Dans tous les cas le revêtement s'élabore à grande vitesse, typiquement 100 μm/min. Cette technique de dépôt est fortement directionnelle et donc difficile à mettre en oeuvre pour des pièces de forme complexe.

C'est essentiellement la projection plasma sous pression réduite qui est utilisée pour le dépôt d'alliages de type MCrAlY. Le dispositif de projection est installé dans une enceinte dans laquelle on pratique une forte dépression (P = 0,05 bar). Ceci permet d'éviter l'oxydation des particules d'alliage projetées, d'augmenter la vitesse des gaz dans le jet plasma et d'allonger la flamme ce qui augmente la vitesse d'impact des particules fondues et, par voie de conséquence, diminue la porosité. Enfin, il faut noter que cette technique autorise un décapage ionique initial en polarisant la surface du substrat ce qui augmente l'adhésion du revêtement sur le substrat. Les dépôts obtenus sont adhérents et faiblement tendus et peuvent être très épais (quelque millimètres). Après projection les revêtements MCrAlY sont diffusés lors d'un traitement thermique sous vide. Ils sont cependant rugueux et nécessitent un usinage post-opératoire suivi d'une tribo-finition.

On peut mentionner également une technique de projection à haute vitesse à la flamme réalisée en faisant réagir un carburant (hydrocarbure et/ou hydrogène) et un comburant (air reconstitué par mélange azote + oxygène, ou oxygène pur).

Une autre catégorie de techniques de dépôt physique-est celle des dépôts physiques en phase vapeur, qui comprennent la pulvérisation cathodique triode et l'évaporation sous faisceau d'électrons.

Pour la pulvérisation cathodique triode, un système à trois électrodes polarisées à quelques kilovolts placé dans une enceinte où règne un vide d'environ $10^{-2}$ Pa permet de déposer à une vitesse comprise entre 5 et 25 μm/h des alliages MCrAlY extrêmement adhérents, non poreux et moins directionnels que dans le cas de la projection plasma.

Pour l'évaporation sous faisceau d'électrons, dans une enceinte maintenue sous un vide meilleur que $10^{-4}$ Pa, un faisceau d'électrons est focalisé à la surface du matériau à déposer contenu dans un creuset métallique refroidi. Un système d'approvisionnement en continu du lingot permet de conserver constant le niveau du bain liquide et de maintenir les conditions de dépôt stationnaires. Les vapeurs émises se condensent sur le substrat placé en regard du bain liquide. Ce substrat est maintenu à température suffisamment élevée pour minimiser les défauts inhérents à la croissance colonnaire du dépôt. Ces défauts sont par la suite éliminés par un grenaillage suivi d'un traitement thermique de diffusion et d'élimination des tensions. Les vitesses de dépôt peuvent atteindre jusqu'à 25 μm/min. Cette technique est décrite dans US 5 698 273 A. Elle a été essentiellement développée pour le dépôt de MCrAlY sur des aubes de turbomachines. Son développement est cependant limité du fait de son coût d'investissement et d'exploitation. De plus, ce procédé très directionnel ne permet pas d'obtenir aisément certaines compositions de revêtement (cas des alliages comprenant des éléments à tension de vapeur très différente).

En revanche, il permet de réaliser l'ensemble revêtement protecteur + barrière thermique (zircone partiellement stabilisée à l'yttrine $ZrO_2$ + 8 % $Y_2O_3$), cette dernière possédant de meilleures propriétés mécaniques et une meilleure tenue aux chocs thermiques que celle obtenue par projection plasma.

Le dépôt électrolytique de l'alliage MCrAlY(Ta) est impossible car il supposerait le dépôt conjoint en milieu aqueux (l'eau n'est plus stable au delà de -1 V par rapport à l'électrode normale à hydrogène) de nickel (E0 = -0,44 V), de cobalt (E0 = -0,28 V), de chrome (E0 = -0,744 V), d'aluminium (E0 = -1,662 V), d'yttrium (E0 = -2,372 V) et le cas échéant de tantale (E0 = -0,750 V). Pour obtenir un dépôt de MCrAlY par électrochimie il faudra donc réaliser un dépôt composite comprenant d'une part du nickel et/ou du cobalt, d'autre part des particules de CrAlY, et ensuite faire diffuser l'ensemble dépôt électrolytique + particules + substrat à haute température (typiquement 2 heures à 1100 °C). Des exemples de mise en oeuvre sont décrits dans US 4 305 792 A, US 4 810 334 A et 5 037 513 A.

À défaut de dépôt électrolytique, il est possible de faire migrer des particules dans un champ électrique important (typiquement 100 V). Le milieu de dépôt choisi doit avoir une constante diélectrique élevée et présenter une grande stabilité électrochimique. C'est l'électrophorèse. Couramment utilisée pour la peinture des automobiles, cette technique permet le dépôt de particules métalliques ou non. Cependant le dépôt obtenu est poreux, friable et peu adhérent. Il doit alors être consolidé par un second dépôt faisant appel à un procédé classique.

Lorsque le revêtement de MCrAlY est soumis à un environnement oxydant, sa phase β s'oxyde (et par voie de conséquence s'appauvrit en aluminium) pour former une couche d'alumine stable et étanche. La quantité de phase β disponible diminue à mesure que cet aluminium est consommé pour disparaître tout à fait au terme de quelque centaines d'heures. Dès lors la protection du revêtement est assurée par l'étanchéité de la couche d'alumine formée vis-à-vis de l'oxygène et par son ancrage dans le revêtement protecteur. Si, par accident, cette couche céramique disparaissait, le revêtement ne serait plus en mesure de la reformer.

Dans le cas de revêtements obtenus par dépôt électrolytique composite, on remarquera que la matrice a une composition limitée: nickel, cobalt ou nickel-cobalt. Les ajouts doivent alors être introduits dans la poudre codéposée. Cette opération nécessite l'élaboration d'un nouvel alliage et sa pulvérisation, ce qui représente une longue suite d'opérations fastidieuses et coûteuses. La consolidation des dépôts électrophorétiques se fait par l'intermédiaire d'un dépôt en phase vapeur à haute température ou par fusion d'une des poudres déposées. De ce fait la flexibilité de la composition du revêtement sera dépendante de la quantité d'aluminium admissible dans l'alliage MCrAlY (équilibre β-γ) ou de la composition de la poudre de brasure utilisée.

Dans le cas des dépôts par projection plasma ou à la flamme, cette composition est essentiellement dépendante de la composition de la poudre utilisée. Les modifications de composition nécessitent alors l'étude et la réalisation d'un nouveau lot de poudre, opération qui, comme chacun sait, est longue et fastidieuse.

Enfin, dans le cas où le revêtement doit supporter une barrière thermique, les procédés connus ne permettent pas de favoriser l'adhérence de cette dernière à la couche d'oxyde ($Al_2O_3$) formée à la surface du MCrAlY.

Le but de l'invention est de remédier à tout ou partie de ces inconvénients.

L'invention vise notamment un procédé du genre défini en introduction, et prévoit qu'il comprend les étapes suivantes:

a) on réalise, sur une poudre d'un alliage précurseur contenant au moins les éléments Cr, Al et Y, un dépôt chimique ou électrolytique d'au moins un élément modificateur propre à étendre le domaine d'existence de ladite phase β et/ou à augmenter la finesse de sa dispersion, à partir d'un premier bain contenant des ions dudit élément modificateur; et
b) on réalise sur ledit substrat un dépôt chimique simultané de nickel et/ou de cobalt et de la poudre ainsi modifiée, à partir d'une suspension de cette dernière dans un second bain autocatalytique contenant des ions nickel et/ou cobalt, pour obtenir ledit revêtement.

L'extension du domaine d'existence de la phase β due à l'élément modificateur permet à celle-ci de subsister après une forte consommation d'aluminium et par conséquent de régénérer si nécessaire la couche d'alumine. Une dispersion plus fine de cette même phase améliore l'ancrage de la couche d'alumine dans le revêtement de MCrAlY.

Des caractéristiques optionnelles de l'invention, complémentaires ou alternatives, sont énoncées ci-après:

- L'élément modificateur est choisi parmi le platine, le palladium, le ruthénium, le rhodium, l'osmium, l'iridium, le fer, le manganèse et le rhénium.

- Ledit premier bain est un bain chimique autocatalytique contenant des ions oxalate et un complexant des ions du métal à déposer.

- L'élément modificateur est choisi parmi le platine et le palladium, ledit complexant est l'éthylènediamine et le premier bain est fortement basique et contient en outre au moins un stabilisant, de l'hydrazine y étant introduite progressivement comme réducteur.

- Le premier bain est un bain aqueux chimique autocatalytique de pH compris entre 8,5 et 14, dont les espèces dissoutes ont la composition initiale suivante en moles/litre:

| ions palladium | 0,01 à 0,3 |
|---|---|
| ions chlorure | 0,01 à 0,5 |
| éthylènediamine | 1 à 4 |
| pentoxyde d'arsenic | $10^{-4}$ à $10^{-2}$ |
| ou sulfate de cuivre | $10^{-5}$ à $10^{-3}$ |
| ou iodate de potassium | $10^{-6}$ à $10^{-3}$ |
| imidazole | 0,2 à 0,6, |

la quantité d'éthylènediamine étant suffisante pour complexer la totalité des ions palladium et pour se combiner en outre aux ions chlorure en évitant la présence d'ions chlorure libres au voisinage des particules à revêtir.

- Dans l'étape a), on met en suspension, avec agitation, ladite poudre d'alliage précurseur dans ledit premier bain.

- La suspension agitée est contenue dans un récipient dont la paroi en contact avec elle est sensiblement sphérique.

- On fait subir à la poudre modifiée, entre les étapes a) et b), un traitement de passivation propre à éviter une déstabilisation dudit second bain.

- Ledit traitement de passivation comprend un lavage par une solution aqueuse d'acide chromique additionnée d'acide phosphorique.

- Ledit second bain contient de l'hydroxyde de nickel-II tri(éthylènediamine) et/ou de l'hydroxyde de cobalt-II tri(éthylènediamine), de l'hydrazine comme réducteur et au moins un stabilisant, l'éthylènediamine jouant le rôle de complexant.

- Dans l'étape b), on polarise négativement le substrat de manière à obtenir une vitesse de croissance du dépôt sensiblement indépendante de la concentration du bain en réducteur.

- Dans l'étape b), on agite lentement et par intermittence le substrat.

- L'étape b) est suivie d'un recuit de diffusion sous atmosphère contrôlée.

Le procédé selon l'invention comprend un dépôt chimique ou électrolytique composite utilisant un élément modificateur tel que défini plus haut. On dépose d'abord ce dernier sur la surface d'une poudre de CrAlY (cette formule incluant les alliages CrAlYTa), à partir d'un bain de dépôt approprié en fonction de la nature de cet élément.

Par exemple, lorsque l'élément modificateur est choisi parmi le platine et le palladium, on peut employer un bain fortement basique utilisant de l'éthylènediamine comme complexant, au moins un stabilisant et de l'hydrazine comme réducteur.

Dans le cas du palladium, il peut s'agir plus particulièrement d'un bain aqueux chimique autocatalytique de pH compris entre 8,5 et 14, dont les espèces dissoutes, réducteur excepté, ont la composition suivante en moles/litre:

| ions palladium | 0,01 à 0,3 |
|---|---|
| ions chlorure | 0,01 à 0,5 |
| éthylènediamine | 1 à 4 |
| pentoxyde d'arsenic | $10^{-4}$ à $10^{-2}$ |
| ou sulfate de cuivre | $10^{-5}$ à $10^{-3}$ |
| ou iodate de potassium | $10^{-6}$ à $10^{-3}$ |
| imidazole | 0,2 à 0,6, |

la quantité d'éthylènediamine étant suffisante pour complexer la totalité des ions palladium et pour se combiner en outre aux ions chlorure en évitant la présence d'ions chlorure libres au voisinage des particules à revêtir.

On trouvera plus de détails sur la composition et l'utilisation de ces bains dans FR 2 652 822 A et FR 2 652 823 A.

Le rhénium peut être déposé à partir d'un complexe oxalate-Re$^{+II}$.

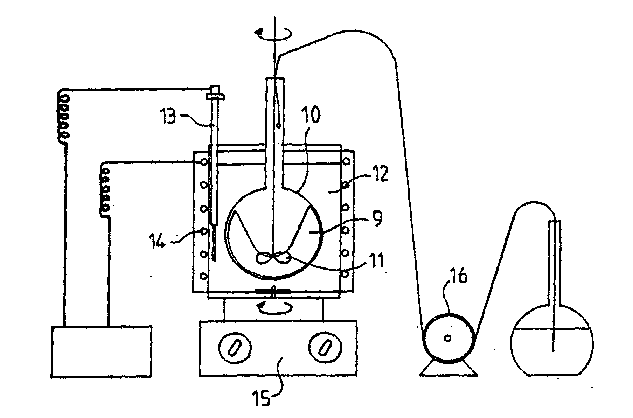

La figure unique annexée montre une suspension 9 de la poudre à traiter dans la solution de dépôt, placée dans un réacteur de forme sphérique (ballon à col), indiqué par la référence 10. L'agitation y est assurée par une hélice 11 pouvant tourner à grande vitesse (jusqu'à 800 tours par minute). Le chauffage est assuré par un bain-marie 12. Le fluide caloporteur utilisé est de l'eau chauffée par effet Joule à une température de 80 °C régulée à l'aide d'un thermomètre à contact 13 qui commande une résistance chauffante 14. Le bain-marie est agité au moyen d'un agitateur magnétique 15. Ce système permet d'avoir un vortex d'agitation homogène et une bonne agitation de l'ensemble bain + poudres à traiter. De plus, le confinement de l'atmosphère au-dessus du bain limite la carbonatation de ce dernier.

Le système est complété par une pompe péristaltique 16 permettant une alimentation en continu de réducteur, la concentration de ce dernier étant sensiblement nulle.

La poudre revêtue subit ensuite une passivation chromique pour éviter une déstabilisation du bain de dépôt de Ni/Co (lavage à l'acide chromique $H_2CrO_4$ à 50 g/l additionné d'acide phosphorique). Cette dernière opération est importante, car en son absence la durée de vie estimée d'un bain pour le dépôt chimique autocatalytique de nickel, quel que soit le réducteur utilisé, est d'environ une à trcis heures.

La poudre ainsi passivée est ensuite mise en suspension dans une solution de dépôt de nickel et/ou de cobalt pur autocatalytique telle que celle décrite dans FR 2 590 595 A. Le substrat devant être revêtu est polarisé négativement à -1 V par rapport à l'électrode normale à hydrogène. Cette dernière opération permet de garantir une vitesse de croissance constante du dépôt, quelle que soit la concentration (non nulle évidemment) en réducteur. Le substrat, une aube de turbine par exemple, est agité lentement dans le bain de telle manière qu'il n'y ait pas de cavitation sur l'intrados. Pour augmenter la charge en poudre incluse il convient d'arrêter cette agitation selon une fréquence à définir empiriquement dans chaque cas. Lorsque l'épaisseur désirée est atteinte, les opérations de dépôt sont arrêtées et l'ensemble substrat + revêtement subit un recuit de diffusion sous atmosphère contrôlée (2 heures à 1100 °C, par exemple).

**Revendications**

1. Procédé pour former sur un substrat métallique un revêtement métallique contenant du nickel et/ou du cobalt, du chrome, de l'aluminium et de l'yttrium, comprenant une phase γ et une phase β dispersée dans la phase γ et propre à former à partir de la phase β, par exposition à l'oxygène à température élevée, une barrière superficielle adhérente d'alumine, **caractérisé en ce qu'**il comprend les étapes suivantes:

a) on réalise, sur une poudre d'un alliage précurseur contenant au moins les éléments Cr, Al et Y, un dépôt chimique ou électrolytique d'au moins un élément modificateur propre à étendre le domaine d'existence de ladite phase β et/ou à augmenter la finesse de sa dispersion, à partir d'un premier bain contenant des ions dudit élément modificateur; et

b) on réalise sur ledit substrat un dépôt chimique simultané de nickel et/ou de cobalt et de la poudre ainsi modifiée, à partir d'une suspension de cette dernière dans un second bain autocatalytique contenant des ions nickel et/ou cobalt, pour obtenir ledit revêtement.

2. Procédé selon la revendication 1, **caractérisé en ce que** l'élément modificateur est choisi parmi le platine, le palladium, le ruthénium, le rhodium, l'osmium, l'iridium, le fer, le manganèse et le rhénium.

3. Procédé selon la revendication 2, **caractérisé en ce que** ledit premier bain est un bain chimique autocatalytique contenant des ions oxalate et un complexant des ions du métal à déposer.

4. Procédé selon la revendication 3, **caractérisé en ce que** l'élément modificateur est choisi parmi le platine et le palladium, que ledit complexant est l'éthylènediamine et que le premier bain est fortement basique et contient en outre au moins un stabilisant, de l'hydrazine y étant introduite progressivement comme réducteur.

5. Procédé selon la revendication 4, **caractérisé en ce que** le premier bain est un bain aqueux chimique autocatalytique de pH compris entre 8,5 et 14, dont les espèces dissoutes ont la composition initiale suivante en moles/litre:

| ions palladium | 0,01 à 0,3 |
|---|---|
| ions chlorure | 0,01 à 0,5 |
| éthylènediamine | 1 à 4 |
| pentoxyde d'arsenic | $10^{-4}$ à $10^{-2}$ |
| ou sulfate de cuivre | $10^{-5}$ à $10^{-3}$ |
| ou iodate de potassium | $10^{-6}$ à $10^{-3}$ |
| imidazole | 0,2 à 0,6, |

la quantité d'éthylènediamine étant suffisante pour complexer la totalité des ions palladium et pour se combiner en outre aux ions chlorure en évitant la présence d'ions chlorure libres au voisinage des particules à revêtir.

6. Procédé selon l'une des revendications précédentes, **caractérisé en ce que**, dans l'étape a), on met en suspension, avec agitation, ladite poudre d'alliage précurseur dans ledit premier bain.

7. Procédé selon la revendication 6, **caractérisé en ce que** la suspension agitée (9) est contenue dans un récipient (10) dont la paroi en contact avec elle est sensiblement sphérique.

**8.** Procédé selon l'une des revendications précédentes, **caractérisé en ce qu'**on fait subir à la poudre modifiée, entre les étapes a) et b), un traitement de passivation propre à éviter une déstabilisation dudit second bain.

**9.** Procédé selon la revendication 8, **caractérisé en ce que** ledit traitement de passivation comprend un lavage par une solution aqueuse d'acide chromique additionnée d'acide phosphorique.

**10.** Procédé selon l'une des revendications précédentes, **caractérisé en ce que** ledit second bain contient de l'hydroxyde de nickel-II tri(éthylènediamine) et/ou de l'hydroxyde de cobalt-II tri(éthylènediamine), de l'hydrazine comme réducteur et au moins un stabilisant, l'éthylènediamine jouant le rôle de complexant.

**11.** Procédé selon l'une des revendications précédentes, **caractérisé en ce que**, dans l'étape b), on polarise négativement le substrat de manière à obtenir une vitesse de croissance du dépôt sensiblement indépendante de la concentration du bain en réducteur.

**12.** Procédé selon l'une des revendications précédentes, **caractérisé en ce que**, dans l'étape b), on agite lentement et par intermittence le substrat.

**13.** Procédé selon l'une des revendications précédentes, **caractérisé en ce que** l'étape b) est suivie d'un recuit de diffusion sous atmosphère contrôlée.

**Claims**

**1.** Method for forming on a metal substrate a metal coating containing nickel and/or cobalt, chromium, aluminium and yttrium, comprising a $\gamma$ phase and a $\beta$ phase dispersed in the $\gamma$ phase and able to form from the $\beta$ phase, by exposure to oxygen at a high temperature, an adherent surface barrier of alumina, **characterized in that** it comprises the following steps:

a) There is produced, on a powder of a precursor alloy containing at least the elements Cr, Al and Y, a chemical or electrolytic deposit of at least one modifying element able to extend the range of existence of the said $\beta$ phase and/or to increase the fineness of its dispersion, from a first bath containing ions of the said modifying element; and

b) A simultaneous chemical deposit is produced of nickel and/or cobalt and of the powder modified in this way, from a suspension of the latter in a second autocatalytic bath containing nickel and/or cobalt ions, in order to obtain the said coating.

**2.** Method according to claim 1, **characterized in that** the modifying element is chosen from platinum, palladium, ruthenium, rhodium, osmium, iridium, iron, manganese and rhenium.

**3.** Method according to claim 2, **characterized in that** the said first bath is an autocatalytic chemical bath containing oxalate ions and a complexing agent for the ions of the metal to be deposited.

**4.** Method according to claim 3, **characterized in that** the modifying element is chosen from platinum and palladium, the said complexing agent is ethylenediamine and the first bath is strongly basic and additionally contains at least one stabilizer, hydrazine being introduced progressively into it as a reducing agent.

**5.** Method according to claim 4, **characterized in that** the first bath is an autocatalytic chemical aqueous bath with a pH of between 8.5 and 14, of which the dissolved species have the following initial composition in moles/litre :

| palladium ions | 0.01 to 0.3 |
|---|---|
| chloride ions | 0.01 to 0.5 |
| ethylenediamine | 1 to 4 |
| arsenic pentoxide | $10^{-4}$ to $10^{-2}$ |
| copper sulfate | $10^{-5}$ to $10^{-3}$ |
| potassium iodate | $10^{-6}$ to $10^{-3}$ |
| imidazole | 0.2 to 0.6 |

the quantity of ethylenediamine being sufficient to complex all the palladium ions and also to combine with the chloride ions while preventing the presence of free chloride ions in the vicinity of the particles to be coated.

**6.** Method according to one of the preceding claims, **characterised in that**, in step a), the said precursor alloy powder is suspended, with agitation, in the said first bath.

**7.** Method according to claim 6, **characterized in that** the agitated suspension (9) is contained in a vessel (10) of which the wall in contact with it is substantially spherical.

**8.** Method according to one of the preceding claims, **characterized in that** the modified powder is subjected, between steps a) and b), to a passivating treatment able to prevent destabilization of the said second bath.

**9.** Method according to claim 8, **characterized in that** the said passivating treatment comprises washing with an aqueous solution of chromic acid with the addition of phosphoric acid.

**10.** Method according to one of the preceding claims, **characterized in that** the said second bath contains nickel-II hydroxide tri(ethylenediamine) and/or cobalt-II hydroxide tri(ethylenediamine), hydrazine as a reducing agent and at least one stabilizer, the ethylenediamine acting as a complexing agent.

**11.** Method according to one of the preceding claims, **characterized in that** in step b) the substrate is polarized negatively so as to obtain a rate of growth of the deposit substantially independent of the concentration of the bath in reducing agent.

**12.** Method according to one of the preceding claims, **characterized in that** in step b), the substrate is slowly and intermittently agitated.

**13.** Method according to one of the preceding claims, **characterized in that** step b) is followed by diffusion annealing in a controlled atmosphere.

**Patentansprüche**

**1.** Verfahren zum Beschichten eines Metallsubstrats mit einem Metallüberzug, der Nickel und/oder Kobalt, Chrom, Aluminium und Yttrium enthält, eine γ-Phase und eine in der γ-Phase dispergierte β-Phase umfasst und, ausgehend von der β-Phase, unter der Einwirkung von Sauerstoff bei erhöhter Temperatur eine Oberflächen-Sperrschicht bilden kann, die an dem Aluminiumoxid haftet, **dadurch gekennzeichnet, dass** das Verfahren die folgenden Stufen umfasst:

a) Bildung eines chemischen oder elektrolytischen Überzugs mindestens eines Modifikator-Elements auf einem Pulver aus einer Vorläuferlegierung, die mindestens die Elemente Cr, Al und Y enthält, der den vorhandenen Bereich der genannten β-Phase vergrößern kann und/oder die Feinheit ihrer Dispersion verbessern kann, wobei man von einem ersten Bad ausgeht, das Ionen des genannten Modifikator-Elements enthält, und
b) Bildung eines gleichzeitigen chemischen Überzugs aus Nickel und/oder Kobalt und dem auf diese Weise modifizierten Pulvers auf dem Substrat, wobei man von einer Suspension des letzgenannten in einem zweiten autokatalytischen Bad ausgeht, das Nickel- und/oder Kobaltionen enthält, unter Bildung des genannten Überzugs.

**2.** Verfahren nach Anspruch 1, **dadurch gekennzeichnet, dass** das Modifikator-Element ausgewählt wird aus der Gruppe Platin, Palladium, Ruthenium, Rhodium, Osmium, Iridium, Eisen, Mangan und Rhenium.

**3.** Verfahren nach Anspruch 2, **dadurch gekennzeichnet, dass** das erste Bad ein autokatalytisches chemisches Bad ist, das Oxalationen und einen Komplexbildner für die abzuscheidenden Metallionen enthält.

**4.** Verfahren nach Anspruch 3, **dadurch gekennzeichnet, dass** das Modifikator-Element ausgewählt wird aus der Gruppe Platin und Palladium, dass der Komplexbildner Ethylendiamin ist und dass das erste Bad stark basisch ist und außerdem mindestens einen Stabilisator und Hydrazin enthält, das als Reduktionsmittel portionsweise eingeführt wird.

**5.** Verfahren nach Anspruch 4, **dadurch gekennzeichnet, dass** das erste Bad ein wässriges autokatalytisches chemisches Bad mit einem pH-Wert zwischen 8,5 und 14 ist, dessen darin gelöste Species die nachstehend angegebene Anfangszusammensetzung in Mol/l haben:

| | |
|---|---|
| Palladiumionen | 0,01 bis 0,3 |
| Chloridionen | 0,01 bis 0,5 |
| Ethylendiamin | 1 bis 4 |
| Arsenpentoxid | $10^{-4}$ bis $10^{-2}$ |
| oder Kupfersulfat | $10^{-5}$ bis $10^{-3}$ |
| oder Kaliumiodat | $10^{-6}$ bis $10^{-3}$ |
| Imidazol | 0,2 bis 0,6 |

wobei die Ethylendiamin-Menge ausreicht, um die Gesamtmenge der Palladiumionen komplex zu binden und sich außerdem mit den Chloridionen zu vereinigen unter Vermeidung der Anwesenheit von freien Chloridionen in Nachbarschaft zu den zu beschichtenden Teilchen.

**6.** Verfahren nach einem der vorhergehenden Ansprüche, **dadurch gekennzeichnet, dass** man in der Stufe (a) das Vorläufer-Legierungspulver unter Rühren in dem ersten Bad suspendiert.

**7.** Verfahren nach Anspruch 6, **dadurch gekennzeichnet, dass** die gerührte Suspension (9) in einem Behälter (10) enthalten ist, dessen damit in Kontakt stehende Wand im wesentlichen kugelförmig ist.

**8.** Verfahren nach einem der vorhergehenden Ansprüche, **dadurch gekennzeichnet, dass** man das modifizierte Pulver zwischen den Stufen (a) und (b) einer Passivierungsbehandlung unterzieht, um eine Destabilisierung des zweiten Bades zu vermeiden.

9.  Verfahren nach Anspruch 8, **dadurch gekennzeichnet, dass** die Passivierungsbehandlung ein Waschen mit einer wässrigen Chromsäurelösung, der Phosphorsäure zugesetzt worden ist, umfasst.

10. Verfahren nach einem der vorhergehenden Ansprüche, **dadurch gekennzeichnet, dass** das zweite Bad Nickel-(II)-tri(ethylendiaminhydroxid) und/oder Kobalt-(II)-tri(ethylendiaminhydroxid), Hydrazin als Reduktionsmittel und mindestens einen Stabilisator enthält, wobei das Ethylendiamin die Rolle des Komplexbildners spielt.

11. Verfahren nach einem der vorhergehenden Ansprüche, **dadurch gekennzeichnet, dass** man in der Stufe (b) das Substrat negativ polarisiert zur Erzielung einer Wachstumsgeschwindigkeit des Überzugs, die im wesentlichen unabhängig von der Konzentration des Reduktionsmittels in dem Bad ist.

12. Verfahren nach einem der vorhergehenden Ansprüche, **dadurch gekennzeichnet, dass** man in der Stufe (b) das Substrat langsam und intermittierend rührt (bewegt).

13. Verfahren nach einem der vorhergehenden Ansprüche, **dadurch gekennzeichnet, dass** auf die Stufe (b) ein Diffusionsglühen in einer kontrollierten Atmosphäre folgt.